# FASCICULE DE BREVET EUROPEEN

(11) **EP 2 134 163 B1**
(45) Date de publication et mention de la délivrance du brevet: **10.08.2016**
(21) Numéro de dépôt: 08719239.9
(22) Date de dépôt: 06.03.2008
(51) Int. Cl.: A01K 11/00

(54) **PERFECTIONNEMENT POUR IDENTIFIANT D'ANIMAUX**
VERBESSERUNG FÜR DIE IDENTIFIKATION VON TIEREN
IMPROVEMENT FOR IDENTIFYING ANIMALS

(30) Priorité: 07.03.2007 FR 0701652
(43) Date de publication de la demande: 23.12.2009
(73) Titulaire: ITW Reyflex France SAS, 74300 THIEZ (FR)
(72) Inventeur: MOUILLE, Stéphane, F-74130 Bonneville (FR)
(74) Mandataire: Chevalier, Renaud Philippe
(86) Numéro de dépôt international: PCT/IB2008/000526
(87) Numéro de publication internationale: WO 2008/107784

(56) Documents cités:
- DE-U1- 29 601 041
- FR-A- 2 849 744
- GB-A- 1 111 418
- US-A- 4 512 096
- US-A- 5 955 953

## Description

Le document US 4 512 096 décrit un dispositif d'identification d'animaux constitué par une large bande plate réalisée de façon à former une bague d'identification par rapprochement et verrouillage de ses deux extrémités, ladite bague d'identification comprenant un transpondeur électronique et étant destinée à être mise en place autour de l'une des pattes de l'animal, les deux extrémités comprenant des moyens de verrouillage complémentaires permettant de verrouiller ensemble les deux extrémités et des moyens de réglage complémentaires permettant d'adapter les dimensions périphériques de la bague à la morphologie de l'animal bagué.

Ainsi l'invention concerne un dispositif d'identification d'animaux selon la revendication 1.

De préférence, la tige de verrouillage comprend une partie cylindrique qui comprend à l'une de ses extrémités une tête de préhension, tandis qu'il est prévu une zone sécable de moindre résistance entre la tête et la partie cylindrique qui permet à l'utilisateur, après mise en place de la bague autour de la patte de l'animal de casser la tige au niveau de la zone sécable et retirer de la tige de verrouillage la tête de préhension.

Avantageusement, la tige de verrouillage comprend à son extrémité d'engagement un cône d'extrémité de forme ovoïde, pour présenter sur sa partie arrière deux rebords dépassant faisant saillie par rapport à la partie cylindrique afin qu'après engagement la tige de verrouillage dans les trous correspondant soit retenue longitudinalement.

L'une des extrémités ou première extrémité, de la bande, comprend au moins une saillie transversale de verrouillage comprenant un trou transversal de verrouillage destiné à recevoir une tige de verrouillage, tandis que l'extrémité de la bande comprend au moins un trou de retenue et de réglage, disposé au niveau de la saillie correspondante, et, avantageusement, il est prévu deux types de verrouillage et le trou transversal de la saillie centrale comprend une paroi centrale qui empêche une éventuelle tentative de retrait d'une tige par la poussée sur la tige opposée.

D'autres caractéristiques et avantages de l'invention se dégageront de la description qui va suivre en regard des dessins annexés qui ne sont donnés qu'à titre d'exemples non limitatifs.

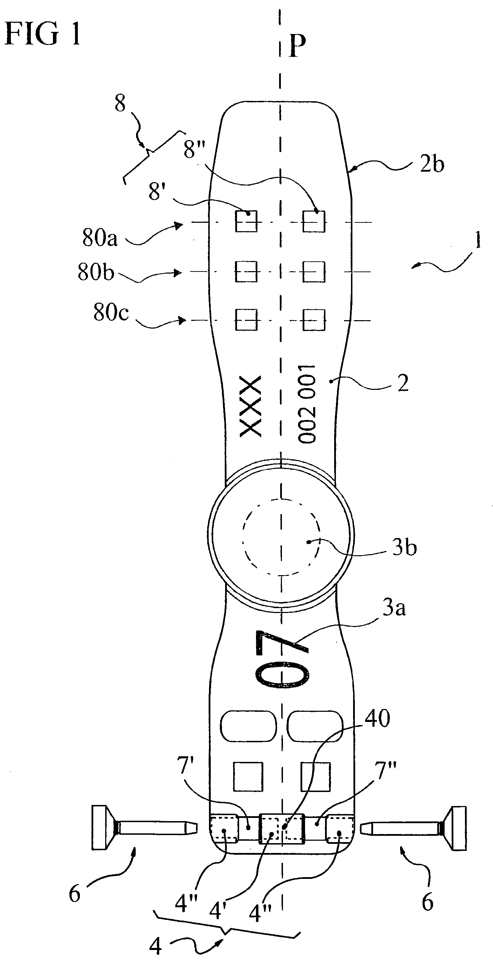

La figure 1 représente le dispositif d'identification selon une vue en plan et dans sa position initiale déployée.

Les figure 3, 4, 5 représentent la tige de verrouillage.

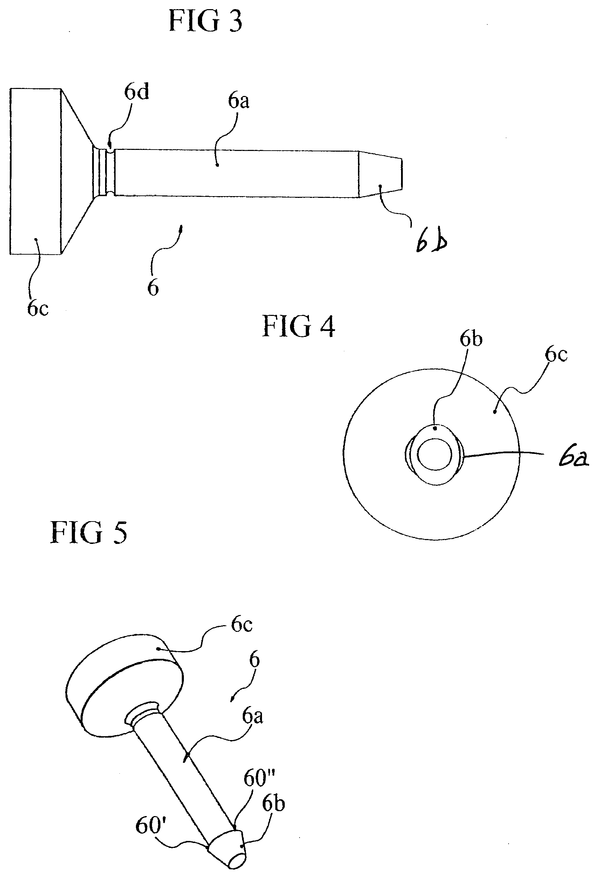

La figure 3 est une vue latérale.
La figure 4 est une vue en bout coté extrémité d'engagement.
La figure 5 est une vue en perspective.

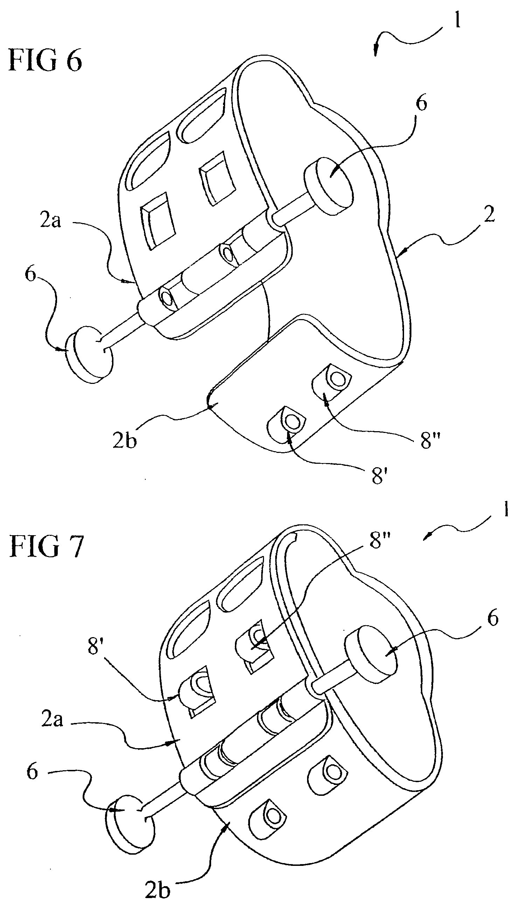

Les figures 6 à 9 illustrent en perspective, le procédé de mise en place du dispositif.
La figure 6 montre le dispositif en cours de flexion avant sa mise en place.
La figure 7 montre le dispositif lors du choix de la dimension périphérique et engagement des sailles transversales de retenue dans les trous de retenue et de réglage.

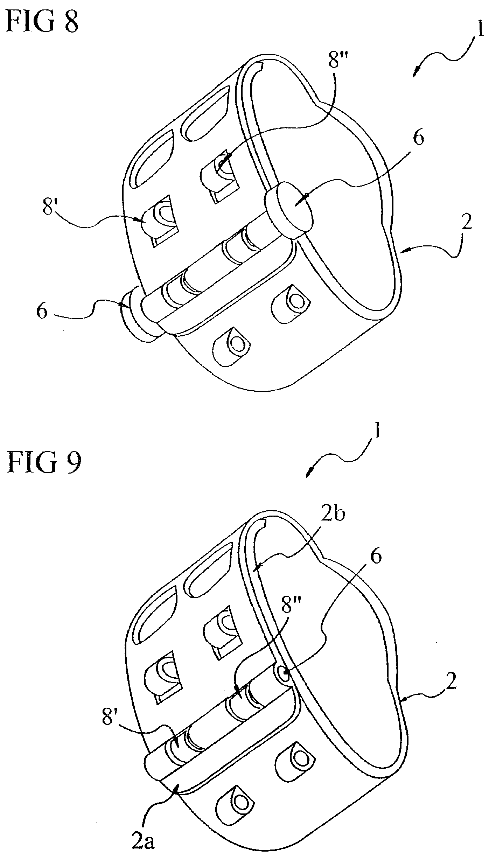

La figure 8 montre le dispositif après engagement complet des tiges de verrouillage.
La figure 9 montre le dispositif lors de la séparation des têtes de préhension des tiges de verrouillage.

Selon l'invention, le dispositif d'identification (1) est constitué par une large bande (2) plate de plan général de symétrie (P) réalisée par exemple en matière plastique déformable, de façon à former une bague par rapprochement et verrouillage de ses deux extrémités (2a, 2b).

Ainsi les deux extrémités (2a, 2b) comprennent des moyens complémentaires de verrouillage permettant de verrouiller ensemble les deux extrémités et des moyens complémentaires de réglage permettant d'adapter les dimensions périphériques de la bague à la morphologie de l'animal bagué.

Notons que la bande (2) comprend des éléments d'identifications de l'animal, qui sont par exemple un marquage laser (3a) voir jet d'encre et/ou un transpondeur électronique (3b).L'une des extrémités (2a) ou première extrémité, de la bande (2), comprend au moins une saillie transversale de verrouillage (4) comprenant un trou transversal de verrouillage (5) destiné à recevoir une tige de verrouillage (6). Par ailleurs l'extrémité de la bande comprend au moins un trou de retenue et de réglage (7), dont on expliquera la fonction. Ce trou de retenue et de verrouillage étant disposé au niveau de la saillie correspondante.

L'autre extrémité (2b) ou deuxième extrémité, de la bande (2) comprend au moins une saillie transversale de retenue (8) comprenant un trou transversal de retenue (9) destiné à recevoir la tige de verrouillage (6). Notons que la saillie transversale de retenue (8) est destinée à être engagée dans le trou de retenue et de réglage (7) de l'autre extrémité (2a).

Par engagement de la tige de verrouillage (6) d'une part dans le trou transversal de verrouillage (5) et dans le trou transversal de retenue (9) permet la fixation et le verrouillage des deux extrémités (2a, 2b).

On notera que la tige de verrouillage (6) qui est avantageusement cylindrique, comprend une partie cylindrique (6a) qui comprend à une de ses extrémités un cône d'engagement (6b), et à son autre extrémité une tête de préhension (6c). Selon l'invention la tige de verrouillage est telle qu'elle comprend une zone sécable (6d) de moindre résistance entre la tête (6c) et la partie cylindrique (6a) qui permet à l'utilisateur, après mise en place de la bague autour de la patte de l'animal de casser la tige au niveau de la zone sécable (6d) et retirer de la tige de verrouillage la tête de préhension (6c).

Selon le mode préféré de réalisation de l'invention tel qu'illustré, la première extrémité (2a) de la bande (2) comprend trois saillies transversales de verrouillage (4', 4", 4"') qui sont alignées transversalement perpendiculairement au plan de symétrie générale (P), à savoir une saillie centrale (4') et deux sailles latérales (4', 4"'). Entre chacune des saillies latérales et la saillie centrale la bande comprend un trou de réglage respectivement (7', 7") dans lesquels sont destinées à être engagées les saillies transversales de retenue (8', 8"). A cet effet la deuxième extrémité (2b) de la bande (2) comprend deux saillies transversales de réglage (8', 8") qui sont alignées transversalement perpendiculairement au plan de symétrie générale (P), et qui sont espacées afin que la distance qui les sépare corresponde à la longueur de la saillie centrale (4') de l'autre extrémité. Bien entendu la position des deux saillies de retenue (8', 8") est en correspondance avec la position des deux trous de retenue (7', 7") de l'autre extrémité. On a compris que les trous de réglage (7', 7") sont disposés entre la saillie centrale (4') et les saillies latérales (4", 4"').

On notera que le trou transversal (5) de la saillie centrale (4') comprend une paroi centrale (40) qui empêche une éventuelle tentative de retrait d'une tige par la poussée sur la tige opposée.

De plus, la bague d'identification comprend, comme nous l'avons déjà signalé précédemment des moyens complémentaires de réglage permettant d'adapter les dimensions périphériques de la bague à la morphologie de l'animal bagué. A cet effet la deuxième extrémité (2b) de la bande (2) comprend plusieurs rangées successives de saillies de retenue (8). Selon le mode d'exécution représenté à titre d'exemple la bande comprend trois rangées successives de saillies (80a, 80b, 80c). Ainsi la bague d'identification peut avoir trois dimensions périphériques, permettant ainsi une adaptation à un grand nombre d'animaux.

Précisons que le cône d'extrémité (6b) est de forme ovoïde, pour présenter sur sa partie arrière deux rebords dépassant (60', 60") faisant saillie par rapport à la partie cylindrique (6a) afin qu'après engagement la tige de verrouillage dans les trous correspondant soit retenue longitudinalement.

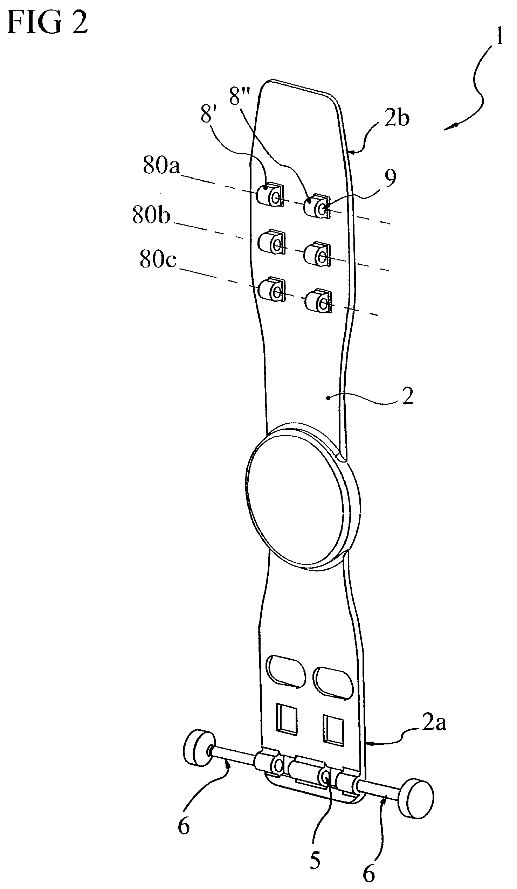

On a compris que selon le mode préféré illustré, la bague d'identification comprend deux tiges de verrouillage. Ainsi, avant sa mise en place les deux tiges peuvent être légèrement engagées tel qu'illustré aux figures 2, 6 et 7. Puis l'utilisateur entoure la patte de l'animal en choisissant d'engager dans les trous de retenue (T, 7") des rangées de saillies de retenue adaptée tel qu'illustré à la figure 7. Dans cette position les trous de verrouillage (5) des saillies de verrouillage (4', 4", 4"') sont en alignement avec les trous transversaux de retenue (9) .

L'utilisateur n'a plus qu'à finaliser l'engagement complet des deux tiges de verrouillage tel qu'illustré figure 8, puis il casse les têtes de préhension (6c) des deux tiges de verrouillage (6) tel qu représenté à la figure 9, ce qui supprime du dispositif les moyens de préhension des tiges et assure l'inviolabilité du dispositif d'identification, puisque les tiges de verrouillage complètement engagées n'offrent aucune prises externe et que pour les retirer le falsificateur devra détruire la bague.

Il va de soi que la bande (2) peut être réalisée dans différentes longueurs, pour que la bague soit adaptée à différentes applications.

Notons aussi que grâce à la construction du dispositif, il est possible d'associer successivement deux dispositifs, ce qui permet une plus grande latitude de réglage.

Par ailleurs on peut aussi prévoir que les saillies de retenue (8', 8") aient une dépouille de façon à ce qu'un léger clipsage s'opère lors de l'introduction de ces saillies dans les trous de réglage correspondants (7', 7"), ce qui procure un meilleur confort d'utilisation pour l'introduction des tiges . ,

## Revendications

1. Dispositif d'identification d'animaux (1) constitué par une large bande (2) plate de plan général de symétrie (P) réalisée par exemple en matière plastique déformable, de façon à former une bague d'identification par rapprochement et verrouillage de ses deux extrémités (2a, 2b), ladite bague d'identification comprenant un marquage laser (3a) ou jet d'encre et/ ou un transpondeur électronique (3b) et étant destinée à être mise en place autour de l'une des pattes de l'animal, les deux extrémités (2a, 2b) comprenant des moyens de verrouillage complémentaires permettant de verrouiller ensemble les deux extrémités et des moyens de réglage complémentaires permettant d'adapter les dimensions périphériques de la bague à la morphologie de l'animal bagué, **caractérisé en ce que**
- l'une des extrémités (2a) ou première extrémité de la bande, comprend au moins une saillie transversale de verrouillage (4) comprenant un trou transversal de verrouillage (5) destiné à recevoir une tige de verrouillage (6), et au moins un trou de retenue et de réglage (7),
- l'autre extrémité (2b) ou deuxième extrémité de la bande (2), comprend au moins une saillie transversale de retenue (8) comprenant un trou transversal de retenue (9) destiné à recevoir la tige de verrouillage (6), tandis que la saillie transversale de retenue (8) est destinée à être engagée dans le trou de retenue et de réglage (7) de l'autre extrémité (2a).

2. Dispositif d'identification d'animaux (1) selon la revendication 1, **caractérisé en ce que** la tige de verrouillage (6) comprend une partie cylindrique (6a) qui comprend à l'une de ses extrémités une tête de préhension (6c), tandis qu'il est prévu une zone sécable (6d) de moindre résistance entre la tête (6c) et la partie cylindrique (6a) qui permet à l'utilisateur, après mise en place de la bague autour de la patte de l'animal de casser la tige au niveau de la zone sécable (6d) et retirer de la tige de verrouillage la tête de préhension (6c).

3. Dispositif d'identification d'animaux (1) selon l'une des revendications 1 ou 2, **caractérisé en ce que** les deux extrémités (2a, 2b) de la bande (2) sont retenues et verrouillées ensemble par engagement de la tige de verrouillage (6) d'une part dans le trou transversal de verrouillage (5) et dans le trou transversal de retenue (9).

4. Dispositif d'identification d'animaux (1) selon la revendication 3, **caractérisé en ce que** la première extrémité (2a) de la bande (2) comprend trois saillies transversales de verrouillage (4', 4", 4'") qui sont alignées transversalement perpendiculairement au plan de symétrie générale (P), à savoir une saillie centrale (4') et deux saillies latérales (4", 4"'), entre chacune des saillies latérales et la saillie centrale la bande étant prévu un trou de réglage respectivement (7', 7") dans lesquels sont destinées à être engagées les saillies transversales de retenue (8', 8").

5. Dispositif d'identification d'animaux (1) selon la revendication 4, **caractérisé en ce que** la deuxième extrémité (2b) de la bande (2) comprend deux saillies transversales de réglage (8', 8") qui sont alignées transversalement perpendiculairement au plan de symétrie générale (P), et qui sont espacées afin que la distance qui les sépare corresponde à la longueur de la saillie centrale (4') de l'autre extrémité, la position des deux saillies de retenue (8', 8") étant en correspondance avec la position des deux trous de retenue (7', 7") de l'autre extrémité.

6. Dispositif d'identification d'animaux (1) selon l'une quelconque des revendications 1 à 5, **caractérisé en ce qu'**il comprend deux tiges de verrouillage (6).

7. Dispositif d'identification d'animaux (1) selon l'un quelconque des revendications 1 à 6, **caractérisé en ce que** la tige de verrouillage comprend à son extrémité (6b) d'engagement un cône d'extrémité (6b) de forme ovoïde, pour présenter sur sa partie arrière deux rebords dépassant (60', 60") faisant saillie par rapport à la partie cylindrique (6a) afin qu'après engagement la tige de verrouillage dans les trous correspondant soit retenue longitudinalement.

8. Dispositif d'identification d'animaux (1) selon l'un quelconque des revendications 1 à 7, **caractérisé en ce que** la deuxième extrémité (2b) de la bande (2) comprend plusieurs rangées successives (80a, 80b, 80c) de saillies de retenue (8).

9. Dispositif d'identification d'animaux (1) selon les revendications 1 et 6, dans lequel le trou transversal (5) de la saillie centrale (4') comprend une paroi centrale (40) qui empêche une éventuelle tentative de retrait d'une tige par la poussée sur la tige opposée.

## Patentansprüche

1. Vorrichtung zum Identifizieren von Tieren (1), die durch ein flaches breites Band (2) in einer allgemeinen Symmetrieebene (P) gebildet wird, das beispielsweise aus einem verformbaren Kunststoffmaterial gefertigt ist, um durch Heranführen und Verriegeln seiner beiden Enden (2a, 2b) einen Identifizierungsring zu bilden, wobei der besagte Identifizierungsring eine Lasermarkierung (3a) oder Tintenstrahlmarkierung und/oder einen elektronischen Transponder (3b) umfasst und dazu bestimmt ist, um das eine der Beine des Tieres gelegt zu werden, wobei die beiden Enden (2a, 2b) ergänzende Verriegelungsmittel umfassen, anhand derer die beiden Enden verriegelt werden können, sowie ergänzende Einstellmittel, anhand derer die Umfangsabmessungen des Ringes der Morphologie des mit dem Ring bestückten Tieres angepasst werden können, **dadurch gekennzeichnet, dass**
- das eine der Enden (2a) oder erste Ende des Bandes zumindest einen quer verlaufenden Riegelvorsprung (4) umfasst, der ein quer verlaufendes Riegelloch (5) umfasst, das dazu bestimmt ist, einen Riegelstift (6) aufzunehmen, sowie zumindest ein Loch zum Festhalten und Einstellen (7),
- das andere Ende (2b) oder zweite Ende des Bandes (2) zumindest einen quer verlaufenden Festhaltevorsprung (8) umfasst, der ein quer verlaufendes Festhalteloch (9) umfasst, das dazu bestimmt ist, den Riegelstift (6) aufzunehmen, während der quer verlaufende Festhaltevorsprung (8) dazu bestimmt ist, in das Loch zum Festhalten und Einstellen (7) des anderen Endes (2a) eingeführt zu werden.

2. Vorrichtung zum Identifizieren von Tieren (1) nach Anspruch 1, **dadurch gekennzeichnet, dass** der Riegelstift (6) einen zylindrischen Abschnitt (6a) umfasst, der an dem einen seiner Enden einen Greifkopf (6c) umfasst, während eine Bruchzone (6d) mit einer geringeren Festigkeit zwischen dem Kopf (6c) und dem einen zylindrischen Abschnitt (6a) vorgesehen ist, der es dem Benutzer ermöglicht, den Stift nach dem Anlegen des Ringes um das Bein des Tieres im Bereich der Bruchzone (6d) abzubrechen, und den Greifkopf (6c) vom Riegelstift zu entfernen.

3. Vorrichtung zum Identifizieren von Tieren (1) nach einem der Ansprüche 1 oder 2, **dadurch gekennzeichnet, dass** die beiden Enden (2a, 2b) des Bandes (2) durch das Einführen des Riegelstifts (6) einerseits in das quer verlaufende Riegelloch (5) und in das quer verlaufende Festhalteloch (9) zusammengehalten und verriegelt werden.

4. Vorrichtung zum Identifizieren von Tieren (1) nach Anspruch 3, **dadurch gekennzeichnet, dass** das erste Ende (2a) des Bandes (2) drei quer verlaufende Riegelvorsprünge (4', 4", 4"') umfasst, die quer verlaufend senkrecht zur allgemeinen Symmetrieebene (P) ausgerichtet sind, nämlich, einen zentralen Vorsprung (4') und zwei seitliche Vorsprünge (4", 4"'), wobei zwischen jedem der seitlichen Vorsprünge und dem zentralen Vorsprung des Bandes jeweils ein Einstellloch (7', 7") vorgesehen ist, die dazu bestimmt sind, dass darin die quer verlaufenden Festhaltevorsprünge (8', 8") eingeführt werden.

5. Vorrichtung zum Identifizieren von Tieren (1) nach Anspruch 4, **dadurch gekennzeichnet, dass** das zweite Ende (2b) des Bandes (2) zwei quer verlaufende Einstellvorsprünge (8', 8") umfasst, die quer verlaufend senkrecht zur allgemeinen Symmetrieebene (P) ausgerichtet sind, und die in einem Abstand zueinander angeordnet sind, damit der Abstand, der die beiden voneinander trennt, der Länge des zentralen Vorsprungs (4') des anderen Endes entspricht, wobei die Position der beiden Festhaltevorsprünge (8', 8") mit der Position der beiden Festhaltelöcher (7', 7") des anderen Endes übereinstimmt.

6. Vorrichtung zum Identifizieren von Tieren (1) nach irgendeinem der Ansprüche 1 bis 5, **dadurch gekennzeichnet, dass** sie zwei Riegelstifte (6) umfasst.

7. Vorrichtung zum Identifizieren von Tieren (1) nach irgendeinem der Ansprüche 1 bis 6, **dadurch gekennzeichnet, dass** der Riegelstift an seinem Einführungsende (6b) einen Abschlusskonus (6b) in einer ovoiden Form umfasst, um an seinem rückwärtigen Abschnitt zwei hervorstehende Ränder (60', 60") aufzuweisen, die im Verhältnis zum zylindrischen Abschnitt (6a) hervorstehen, damit der Riegelstift nach dem Einführen in die entsprechenden Löcher in Längsrichtung festgehalten wird.

8. Vorrichtung zum Identifizieren von Tieren (1) nach irgendeinem der Ansprüche 1 bis 7, **dadurch gekennzeichnet, dass** das zweite Ende (2b) des Bandes (2) mehrere aufeinander folgende Reihen (80a, 80b, 80c) an Festhaltevorsprüngen (8) umfasst.

9. Vorrichtung zum Identifizieren von Tieren (1) nach den Ansprüchen 1 und 6, wobei das quer verlaufende Loch (5) des zentralen Vorsprungs (4') eine zentrale Wand (40) umfasst, die einen eventuellen Versuch des Herausziehens eines Stifts durch das Anschieben des gegenüberliegenden Stiftes verhindert.

## Claims

1. An animal identification device (1) consisting of a flat large band (2) of a general plane of symmetry (P) made for example of deformable plastic material, so as to form an identification ring by approximation and locking of its two ends (2a, 2b), said identification ring comprising a laser marking (3a) or ink jet and / or an electronic transponder (3b) and being intended to be placed around one of the legs of the animal, the two ends (2a, 2b) comprising complementary locking means allowing locking together the two ends and complementary setting means allowing adapting the peripheral dimensions of the ring to the morphology of the banded animal, **characterized in that**
- one of the ends (2a) or first end of the band, comprises at least one transverse locking projection (4) comprising a transverse locking hole (5) intended to receive a locking rod (6), and at least one retaining and setting hole (7),
- the other end (2b) or second end of the band (2), comprises at least one transverse retaining projection (8) comprising a transverse retaining hole (9) intended to receive the locking rod (6), while the transverse retaining projection (8) is intended to be engaged in the retaining and setting hole (7) of the other end (2a).

2. The animal identification device (1) according to claim 1, **characterized in that** the locking rod (6) comprises a cylindrical portion (6a) which comprises at one of its ends a gripping head (6c ), while there is provided a breakable area (6d) of lower resistance between the head (6c) and the cylindrical portion (6a) which enables the user, after placing the ring around the leg of the animal, to break the rod at the breakable area (6d) and to remove the gripping head (6c) from the locking rod.

3. The animal identification device (1) according to any of claims 1 or 2, **characterized in that** the two ends (2a, 2b) of the band (2) are retained and locked together by engagement of the locking rod (6), on the one hand, in the transverse locking hole (5) and, on the other hand, in the transverse retaining hole (9).

4. The animal identification device (1) according to claim 3, **characterized in that** that the first end (2a) of the band (2) comprises three transverse locking projections (4', 4", 4"') which are transversely aligned perpendicularly to the general plane of symmetry (P), namely a central projection (4') and two lateral projections (4", 4"'), between each of the lateral projections and the central projection, the band being provided with a setting hole respectively (7', 7") in which the transverse retaining projections (8', 8") are intended to be engaged.

5. The animal identification device (1) according to claim 4, **characterized in that** that the second end (2b) of the band (2) comprises two transverse setting projections (8', 8") which are transversely aligned perpendicularly to the general plane of symmetry (P), and which are spaced so that the distance between them corresponds to the length of the central projection (4') of the other end, the position of the two retaining projections (8', 8") being in correspondence with the position of the two retaining holes (7', 7") of the other end.

6. The animal identification device (1) according to any one of claims 1 to 5, **characterized in that** it comprises two locking rods (6).

7. The animal identification device (1) according to any one of claims 1 to 6, **characterized in that** the locking rod comprises at its engaging end (6b) an ovoid-shaped end cone (6b), for presenting on its rear portion two extending flanges (60', 60") protruding relative to the cylindrical portion (6a) so that, after engagement, the locking rod in the corresponding holes is longitudinally retained.

8. The animal identification device (1) according to any one of claims 1 to 7, **characterized in that** the second end (2b) of the band (2) comprises a plurality of successive rows (80a, 80b, 80c) of retaining projections (8).

9. The animal identification device (1) according to claims 1 and 6, wherein the transverse hole (5) of the central projection (4') comprises a central wall (40) which prevents any possible attempt of removing a rod by pushing on the opposite rod.
